# EUROPEAN PATENT APPLICATION

(11) **EP 4 470 909 A1**
(43) Date of publication of application: **04.12.2024**
(21) Application number: 23176558.7
(22) Date of filing: 31.05.2023
(51) Int. Cl.: B64C 1/18, B64D 11/06, B60N 2/015

(54) **SEAT RAIL**

(71) Applicant: Airbus Operations GmbH, 21129 Hamburg (DE)
(72) Inventor: ROBRECHT, Volker, 21129 Hamburg (DE); VOLLMER, Malte, 21129 Hamburg (DE)
(74) Representative: LKGLOBAL Lorenz & Kopf Patentanwalt Attorney at Law PartG mbB

(57) **Abstract**

The present invention relates to seat rails. In order to provide improved seat mounting options, a seat rail (10) for mounting passenger seats in an aircraft is provided. The seat rail comprises a longitudinal rail body (12) with a first horizontal flange member (14); and a vertical web member (16) protruding perpendicular from the first horizontal flange member. The first horizontal flange member is configured for attaching floor panels to the first horizontal flange member at least on one side of the vertical web member. The vertical web member is configured for mounting aircraft passenger seats. The vertical web member comprises an upper edge (18) and a plurality of horizontal through holes (20) in the vertical web member arranged in a regular pattern. The plurality of through holes is configured to receive locking members for releasably mounting seat fittings to the upper edge of the vertical web member.

## Description

### FIELD OF THE INVENTION

The present invention relates to seat rails, and in particular to a seat rail for mounting passenger seats in an aircraft, to a seat fitting for mounting passenger seats in an aircraft, to a floor assembly for an aircraft cabin, to a passenger seating arrangement for an aircraft and to a method for mounting seats in an aircraft cabin.

### BACKGROUND OF THE INVENTION

In aircraft cabin spaces, passenger seats are fixed to the cabin floor. In order to be able to adjust the seating pattern, i.e. to adjust a seating pitch, longitudinally running seat rails are provided within the cabin floor to be able to mount the seats at various locations along the seat rail. Various examples for seat rails exist as the interface between fuselage structure, i.e. cabin floor construction, and the seats. The seats are provided with fittings for connection with the rail. The seat rail itself is attached to a crossbeam of the cabin floor construction. The rails are subject to corrosion and other impacts when being exposed to cabin activity in commercial aircraft. It has been shown that this leads to the need of regular replacement of the seat rails.

### SUMMARY OF THE INVENTION

There may thus be a need to provide improved seat mounting options.

The object of the present invention is solved by the subject-matter of the independent claims; further embodiments are incorporated in the dependent claims. It should be noted that the following described aspects of the invention apply also for the seat rail for mounting passenger seats in an aircraft, for the seat fitting for mounting passenger seats in an aircraft, for the floor assembly for an aircraft cabin, for the passenger seating arrangement for an aircraft and for the method for mounting seats in an aircraft cabin.

According to the present invention, a seat rail for mounting passenger seats in an aircraft is provided. The seat rail comprises a longitudinal rail body with a first horizontal flange member and with a vertical web member protruding perpendicular from the first horizontal flange member. The first horizontal flange member is configured for attaching floor panels to the first horizontal flange member at least on one side of the vertical web member. The vertical web member is configured for mounting aircraft passenger seats. The vertical web member comprises an upper edge and a plurality of horizontal through holes in the vertical web member arranged in a regular pattern. The plurality of through holes is configured to receive locking members for releasably mounting seat fittings to the upper edge of the vertical web member.

As an advantage, a corrosion free design is provided as no liquid can be accumulated in an open profile at the bottom. The seat rail is easy to manufacture due to its simple structural elements with a hole pattern. The rail is also easy to protect, and corrosion issues are avoided due to an open profile, contrary to a closed profile as for other known rails. The seat rail provides a releasably and securely mounting of seats and other equipment. Any customization of the seating arrangement is provided only via the seat by the operating airline, and there is no need of a provision on the structure side.

As an effect, at the top of the vertical web there is a defined area of contact between the seat rail and the fitting. This can be realized as a dedicated sliding pad to protect both surfaces.

According to an example, the seat rail is further comprising a second horizontal flange member and a vertical web segment between the second horizontal flange member and the first horizontal flange member such that the seat rail is also provided as structural crossbeam member of the cabin floor construction.

According to the present invention, also a seat fitting for mounting passenger seats in an aircraft is provided. The seat fitting comprises a fitting body with a connection portion for connection to a seat leg of a passenger seat and with a rail mount portion for mounting the seat fitting to a vertical web member of a seat rail. The connection portion comprises a connecting part configured for a connection with a lower end of a seat leg. The rail mount portion comprises an engaging part with at least one mounting pin for releasably engaging with a horizontal through hole in the vertical web member.

In an example, the fitting body comprises a fork-like structure for engaging the vertical web member; wherein a first body part and a second body part are provided; wherein at least one of the first body part and a second body part are having a locking member for engaging with the holes in the seat rail; wherein the first body part and the and second body part are configured as temporarily releasable from each other to disengage the locking member from the seat rail.

According to an example, the connection portion comprises a bolt receiving part as the connecting part. The bolt receiving part is configured for a bolt connection with a lower end of a seat leg. An axis of the bolt receiving part is aligned parallel to an axis of the at least one mounting pin.

According to an example, the seat fitting also comprises a locking member, configured to interact with the at least one of the at least one mounting pin once the mounting pin engages the through hole such that the mounting pin cannot de-engage with the through hole.

According to an example, in a first option, the seat fitting is provided as a front fitting for a front seat leg. The engaging part of the front fitting comprises one mounting pin for engaging with one through hole. In a second option, the seat fitting is provided as a rear fitting for a rear seat leg. The engaging part of the rear fitting comprises at least two pins for each engaging with one of the through holes.

According to an example, the at least one mounting pin is movably mounted to the rail mount portion in a pin axis direction such that the at least one mounting pin can be moved between an engaged and a disengaged position when the seat fitting is sitting on the seat rail.

According to an example, the at least one mounting pin is fixedly mounted to the rail mount portion. The fitting body comprises a resting portion to provide a resting position of the seat fitting on the seat rail while the seat fitting is moved laterally to the seat rail such that the at least one mounting pin can disengage from the vertical web member of the seat rail.

According to an example, the fitting body comprises a lower resting surface for abutting an upper edge of the vertical web member of the rail when mounted to the rail. The lower resting surface comprises two projections acting as supports for contacting the upper edge of the rail.

According to the present invention, also a seat fixation system for passenger seats in an aircraft is provided. The system comprises at least one rail according to one of the examples above, and at least one seat fitting according to one of the examples above. The at last one seat fitting is releasably mountable to the upper edge of the vertical web member by inserting the at least one mounting pin in one of the through holes of the vertical web member.

According to the present invention, also a floor assembly for an aircraft cabin is provided. The floor assembly comprises a plurality of cabin floor panels and, in an option, at least two seat rails according to the examples above. In another option. The floor assembly comprises a plurality of cabin floor panels and at least one seat fixation system according to the example above. At least a part of the floor panels is arranged adjacent to the seat rails with their panel edges attached to a horizontal web member of the respective adjacent seat rail.

According to the present invention, also a passenger seating arrangement for an aircraft is provided. The arrangement comprises a floor assembly according to one of the examples above. The arrangement also comprises a plurality of passenger seats. The passenger seats are mounted to the vertical web members of the seat rails.

According to the present invention, also a method for mounting seats in an aircraft cabin is provided. The method comprises the following steps:
- providing at least two seat rails according to one of the examples above;
- providing at least one passenger seat, wherein a seat frame of the passenger seat is equipped at each seat leg with a seat fitting according to one of the examples above; and
- mounting the seat fittings to the seat rails.

According to an aspect, a concept of a seat rail / seat interface is provided resulting in a different seat rail profile with a dedicated vertical web area with a hole pattern at the top of the upper flange of the seat rail for the seat fitting. Thus, a solution is provided to reduce an accumulation of liquid within the seat rail where the rail is subject to wear due to seat pitch changes to eliminate seat rail corrosion.

According to an aspect, the portions of the seat rail where protective measures like protective layers are affected by fittings moved along the rail for changing a seat pitch, are provided as raised portions of the rail where residual spilled liquid is not present over longer periods.

According to a further aspect, the seat rail profile can also be applied in cargo areas as cargo spaces. Instead of the set fittings, cargo fittings as mounting points are provided.

Within this concept there will be a single vertical web with a hole pattern at the top of the seat rail upper flange. The fitting as interface to the seat is using a bolt like structure to transfer the loads from the seat into the seat rail. The seat fitting will be installed from the side with its bolt through the hole of the vertical web, so the fitting needs to be adjusted first in the correct x-position (global aircraft coordinates) and then pushed in y-direction into the hole pattern. The seat fitting can be provided with a sliding pad (this can be non-metallic) which is positioned next to the upper surface of the vertical web of seat rail. This protects the surface protection scheme of the seat rail. After installing the seat fitting at the correct position, it will be locked by a security device to prevent it from any displacement. Different principles of securing are possible.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a perspective view of an example of a seat rail for mounting passenger seats in an aircraft.
Fig. 2a and Fig. 2b show further examples of a seat rail.
Fig. 3 schematically shows a side view of an example of a seat fitting for mounting passenger seats in an aircraft.
Fig. 4 shows a cross section of a seat fixation system for passenger seats in an aircraft with floor panels shown as options.
Fig. 5 shows a cross section of an example of a floor assembly for an aircraft cabin.
Fig. 6 shows a cross section of the floor assembly of Fig. 5 with an inserted filler.
Fig. 7a, Fig. 7b and Fig. 7c show different states during mounting a seat fitting to a seat rail.
Fig. 8 shows an example of a locking member.
Fig. 9 shows another example of a locking member.
Fig. 10 shows a further example of a locking member.
Fig. 11 shows a further example of a locking member.
Fig. 12 shows an example of a fitting with contacting portions.
Fig. 13a shows another example of mounting a seat fitting to a seat rail, and Fig. 13b shows the fitting mounted to the seat rail.
Fig. 14a shows a further example of mounting a seat fitting to a seat rail, and Fig. 14b shows the fitting mounted to the seat rail.
Fig. 15a shows an example of mounting a seat fitting to a seat rail, and Fig. 15b shows the fitting mounted to the seat rail.
Fig. 16a shows a fitting, and Fig. 16b shows the fitting mounted to a seat rail.
Fig. 17a shows a fitting with a fork-like structure for engaging the vertical web member in a mounted state, and Fig. 17b shows the fork-like structure in an opened stated for repositioning the fitting on the rail.
Fig. 18a shows a variation of a fitting with a fork-like structure in a mounted state, and Fig. 18b shows the fork-like structure in a state for repositioning the fitting on the rail.
Fig. 19 shows an example of a passenger seating arrangement for an aircraft in the context of a cross-section of an aircraft.
Fig. 20 shows basic steps of an example of a method for mounting seats in an aircraft cabin.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

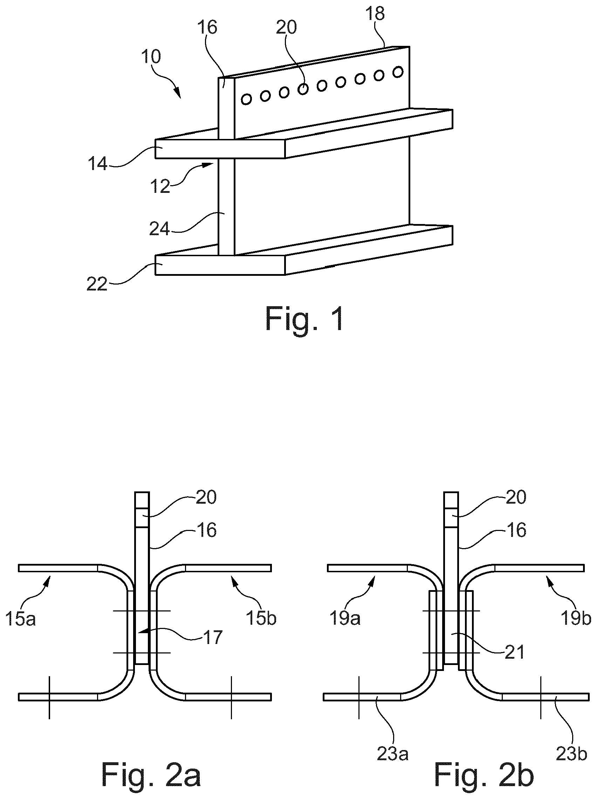

Fig. 1 schematically shows a perspective view of an example of a seat rail 10 for mounting passenger seats in an aircraft. The seat rail 10 comprises a longitudinal rail body 12 with a first horizontal flange member 14 and a vertical web member 16 protruding perpendicular from the first horizontal flange member 14. The first horizontal flange member 14 is configured for attaching floor panels to the first horizontal flange member 14 at least on one side of the vertical web member 16. The vertical web member 16 is configured for mounting aircraft passenger seats. The vertical web member 16 comprises an upper edge 18 and a plurality of horizontal through holes 20 in the vertical web member 16 arranged in a regular pattern. The plurality of through holes 20 is configured to receive locking members for releasably mounting seat fittings to the upper edge 18 of the vertical web member 16.

The term "seat rail" refers to a longitudinal structure that is provided to be mounted inside a cabin space in the cabin floor in order to serve as a mount for seats. The seat rail 10 may also be used for mounting other parts inside a cabin like partitions, monuments, galleys and lavatories. The seat rail 10 may be a linear or curved structure that allows fixation at a plurality of locations, for example in a certain constant or irregular pattern.

The term "horizontal" refers to the orientation when the rail is in its mounted state within an aircraft. The term horizontal is referring to the arrangement of the floor level or floor plane.

The term "vertical" refers to a direction perpendicular to the floor level.

The term "flange member" refers to a mainly horizontally extending segment such as the upper and lower parts in an I-shaped beam cross section.

The term "web member" refers to the mainly vertically extending segment such as the central part of an I-shaped beam cross section.

In an example, the through holes are arranged with a one-inch pitch (2,54 cm pitch).

In an example, shown in Fig. 1 as an option, the seat rail 10 is further comprising a second horizontal flange member 22 and a vertical web segment 24 between the second horizontal flange member 22 and the first horizontal flange member 14 such that the seat rail 10 is also provided as structural crossbeam member of the cabin floor construction.

It is noted that the figures show a seat rail with first and second horizontal flange, but other variations for the seat rail are also provided, such as without a second horizontal flange, or with a differently shaped profile acting as beam-like structure but having the upper vertical web segment 16 with the through holes 20.

The term "web segment" refers to a part of the profile in the cross section that extends further in a perpendicular manner to the flanges. The web segment can be a separate part in addition to the vertical web member or can be an extension of the vertical web member.

The term "crossbeam" refers to a constructive member spanning from one support on a support structure to another support on the support structure. The crossbeams serve for transferring load from the floor panels, e.g. their own weight plus the use weight from passengers, luggage, trolleys and the like. The crossbeams are part of the floor construction. In some examples, the crossbeams are not part of the primary structure of an aircraft, i.e. the structure that is considered essential for the aircraft and that must not be changed or altered during use of the aircraft. In some examples, the crossbeams are part of the primary structure of an aircraft.

The term "structural" refers to being effective in load transfer that stems from the use of the aircraft and that is more than just carrying their own weight.

In an option, the seat rail 10 is provided with the first horizontal flange member 14, the vertical member protruding perpendicular from the at least one horizontal flange member 14 in a first direction, i.e. upwards, and a further vertical member on the other side of the at least one horizontal flange member 14 in a second direction, i.e. downwards.

In an example, the seat rail 10 comprises an F-like cross-section.

In an example, the seat rail 10 comprises a plus- or cross-like cross-section.

The hole pattern is ideally with an inch raster as a classical seat position grid. The profile can be based on an extrusion process or based on combining segments.

Fig. 2a and Fig. 2b show further examples of a seat rail 10. As a further option, an equivalent profile is provided, e.g. by a sheet metal solution with two U-shape segments as in Fig. 2a (or two x L-shape profiles as in Fig. 2b) which has two horizontal flanges for the floor panel attachment and the cross beam attachment on each side. The top (vertical) web comes with the hole pattern in the top web.

In Fig. 2a, for example, a first U-shape segment 15a and a second U-shape segment 15b are connected to a central web segment 17 that is forming the vertical web member 16. The U-shape segments 15a and 15b are forming the parts for the first horizontal flange member 14 with their upper arms of the U-profile. The lower arms are forming the second horizontal flange member 22. The U-shape segments 15a and 15b and the central web segment 17 can be connected via welding, rivets, bolts or other suitable means.

In Fig. 2b, for example, a first upper L-shape segment 19a and a second upper L-shape segment 19b are connected to a central web segment 21 that is forming the vertical web member 16. The upper L-shape segments 19a and 19b are forming the parts for the first horizontal flange member 14 with their upper arms of the L-profile. Further, as an option, a first lower L-shape segment 23a and a second lower L-shape segment 23b are connected to the central web segment 21. The lower L-shape segments 23a and 23b are forming the parts for the second horizontal flange member 22 with their lower arms of the L-profile.

The lower arms are forming the second horizontal flange member 22. The U-shape segments 15a and 15b and the central web segment 17 can be connected via welding, rivets, bolts or other suitable means.

In an option, the first lower L-shape segment 23a and a second lower L-shape segment 23b are not provided.

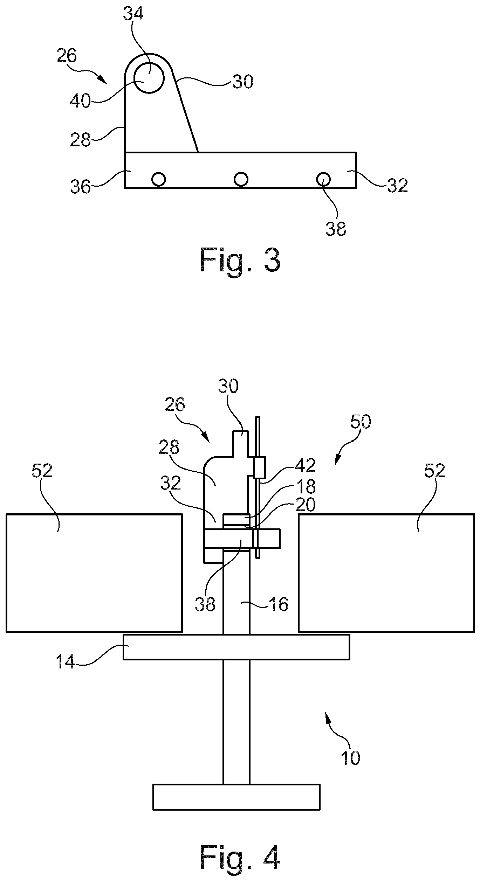

Fig. 3 schematically shows a side view of an example of a seat fitting 26 for mounting passenger seats in an aircraft. The seat fitting 26 comprises a fitting body 28 with a connection portion 30 for connection to a seat leg of a passenger seat. The seat fitting 26 also comprises a rail mount portion 32 for mounting the seat fitting 26 to a vertical web member of a seat rail 10. The connection portion comprises a connecting part 34 configured for a connection with a lower end of a seat leg. The rail mount portion 32 comprises an engaging part 36 with at least one mounting pin 38 for releasably engaging with one of the horizontal through holes 20 in the vertical web member 16 mentioned above.

The term "seat fitting" refers to the bracket or clamp that is used to mount a seat to the floor. The seat fitting 26 connects the seat to the seat rail 10 and ensures the transfer of possibly acting forces when the seat is in use. The seat fitting 26 may provide a pivoting point, i.e. rotating point, for the seat leg. In other examples, the seat fitting provides a rigid and non-pivoting mount.

The term "portion" refers to a segment or part of the seat fitting 26. The portion can be a separate constructional part or can be a portion of an integrated structure.

The term "engage with" refers to a mechanical interaction and e.g. a form-fitting in relation to the forces and load paths to transfer by the mount.

The term "mounting pin" refers to a structure inserted for achieving the proper connection for releasably fixing the seat to the seat rail 10.

The seat fitting can also be referred to as seat bracket, seat clamp, movable seat mount, releasable seat mount or detachable seat mount.

In an example, the connection portion comprises an eye portion for providing a pivoting connection point for a mounting link of the seat leg. As an example, the eye portion is provided as a plate and the mounting link is provided as a bracket and a common bolt is inserted in the holes of both the bracket and the plate. As another example, the eye portion is provided as a bracket and the mounting link is provided as a plate and a common bolt is inserted in the holes of both the plate and the bracket.

In an example, an installation of the seat interface, i.e. the seat fitting is provided from one side.

In an option, the locking device is already attached to the seat fitting.

In another option, a visual indicator is provided for indicating that a locking position of the locking devices has been achieved.

In an example, shown in Fig. 3 as an option, the connection portion 30 comprises a bolt receiving part 40 as the connecting part 34.The bolt receiving part 40 is configured for a bolt connection with a lower end of a seat leg. An axis of the bolt receiving part 40 is aligned parallel to an axis of the at least one mounting pin 38.

The term "bolt" refers to e.g. linear components like screws, rivets and pins.

In an example, shown in Fig. 4 in the context of a fixation system, the seat fitting 26 also comprises a locking member 42, configured to interact with the at least one of the at least one mounting pin 38 once the mounting pin 38 engages the through hole 20 such that the mounting pin 38 cannot de-engage with the through hole 20.

The term "locking member" refers to part that is used for ensuring that the mounting element like the mounting pin 38 is not loosened. The locking member 42 thus locks (and unlocks) the connection by the mounting pin. The locking member 42 is thus an additional part or measure to fix the mount against unwanted de-mounting.

The locking member 42 can also be referred to as securing member or fixation member.

In an example, the locking member 42 is a pin vertically insertable into the free end of the mounting pin once the mountings pin extends, i.e. reaches through the through hole.

In an example, the locking member 42 is a locking plate comprising a recess with a wider part to be pushed over the free end of a mounting pin and a narrower part to engage with a recessed portion of the mounting pin near the free end.

In another example, the locking member is a movably hold pin with a grip portion to facilitate handling of locking and unlocking.

Fig. 4 shows a cross section of a seat fixation system 50 for passenger seats in an aircraft with floor panels 52 shown as options. The seat fixation system 50 comprises at least one example of the seat rail 10 according to one of the examples above. The seat fixation system 50 further comprises at least one example of the seat fitting 26 according to one of the examples above. The at last one seat fitting 26 is releasably mountable to the upper edge 18 of the vertical web member 16 by inserting the at least one mounting pin in one of the through holes 20 of the vertical web member 16.

The term "mounted to the upper edge" refers to the fitting being fixedly engaged with the seat rail's 10 upper vertical web member 16.

In an example, the engaging part and the through holes are provided with matching cross sections such that a form fitting connection is provided for transmitting loads during use of the passenger seat.

In an example, the form fitting connection allows rotation around an axis parallel to the horizontal flange member 14 and transverse to the longitudinal extension of the seat rail 10.

In an example, the positioning of the fitting (and the seat) follows three main steps: The fitting is positioned along the seat rail 10 profile to adjust fitting bolt with hole pattern. The fitting bolt is pushed in the holes. The bolt (or pin) is locked. The locking device can be realized in several ways.

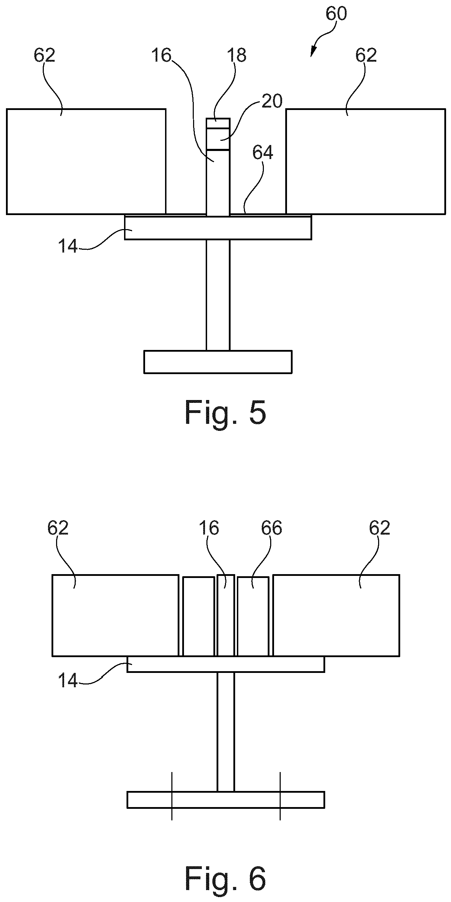

Fig. 5 shows a cross section of an example of a floor assembly 60 for an aircraft cabin. The floor assembly 60 comprises a plurality of cabin floor panels 62. In one option, the floor assembly 60 comprises at least two examples of the seat rails 10 according to the examples above. In another option, the floor assembly 60 comprises at least one example of the seat fixation system 50 according to the examples above. At least a part of the floor panels 62 is arranged adjacent to the seat rails 10 with their panel edges attached to a horizontal web member of the respective adjacent seat rail 10.

In an example, a floor assembly for an aircraft cabin is provided that comprises a plurality of cabin floor panels 62 and at least two seat rails 10 according to the examples above and at least two seat fittings to one of the examples above. At least a part of the floor panels is arranged adjacent to the seat rails 10 with their panel edges attached to a horizontal web member of the respective adjacent seat rail 10.

The term "cabin floor panels" refers to structural panels acting as support for the final surface like a carpet or other floor material. The cabin floor panels may be provided as sandwich plates providing stiffness, stability and a lightweight structure.

The term "adjacent" refers to a neighboring arrangement, i.e. directly next to the seat rail 10.

In an example, shown as an option in Fig. 5 and Fig. 6, the upper edge of the vertical web member 16 of the seat rail 10 is aligned with an upper surface of the cabin floor panels 62.

The term "aligned" refers to approximately the same level, e.g. such that the passenger does not stumble.

The term "upper surface" refers to the final floor level when the cabin floor is in use.

The top of the seat rail 10 profile is at maximum height the same level as the floor panels to eliminate the risk of stumbling.

In an example, shown in Fig. 5 as an option, sealing material 64 is applied to the upper parts of the horizontal flange member 14 to provide a sealing between the seat rail 10 and the attached floor panels. The sealing material provides an additional corrosion protection layer for the seat rail 10. For example, the sealing material is provided as sealing tape, or as glass ply, titanium foil, abrasive paint or the like.

If required the seat rail 10 profile can be protected as well by an additional layer (e.g. glass ply, sealing tape or titanium foil) on the top of the floor panel flanges to even further improve the corrosion situation between the seat rail 10 and the floor panels.

In an example, filler portions are provided for parts along the seat rail 10 without seat fittings. As an example, the floor filler is provided to ensure liquid tightness.

In general the seat rail 10 and the fitting will be modified but the seat in general stays the same / similar.

Fig. 6 shows a cross section of the floor assembly of Fig. 5 with an inserted filler 66. In the cases where no fitting is used the free space between the seat rail 10 and the floor panels needs to be closed by e.g. the filler 66 to ensure liquid tightness as much as possible.

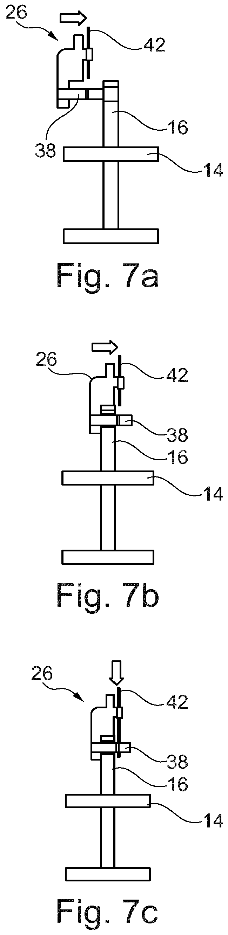

Fig. 7a, Fig. 7b and Fig. 7c show different states during mounting a seat fitting to a seat rail 10. In Fig. 7a, the seat fitting 26 (e.g. together with a seat mounted thereon) is moved lengthwise along the rail to the desired position. The at least one mounting pin 38 is then moved to engage with at least one of the through holes 20. In Fig. 7b, the seat fitting 26 rests on the upper edge with a contact portion. In Fig. 7c, an example of the locking member 42, such as a locking pin, is pushed downwards to lock the position of the mounting pin in relation to the rail 10.

As an option, shown in Fig. 7a, the at least one mounting pin 38 is fixedly mounted to the rail mount portion.

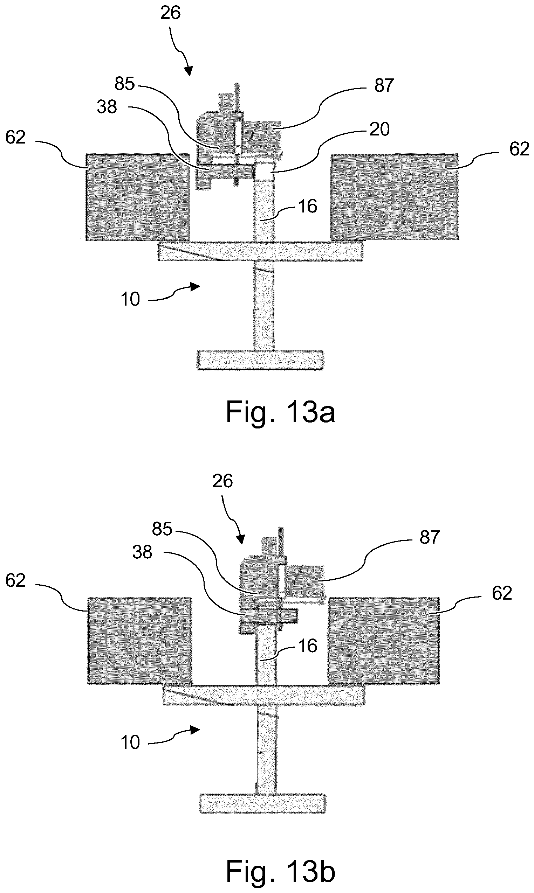

As an option, see also Fig. 13a, the fitting body comprises a resting portion to provide a resting position of the seat fitting on the seat rail 10 while the seat fitting is moved laterally to the seat rail 10 such that the at least one mounting pin can disengage from the vertical web member 16 of the seat rail 10.

The term "fixedly mounted" refers to a pin that is fixedly hold by the rail mount portion and that cannot move in relation to the rail mount portion.

As another option, not shown in detail, the at least one mounting pin 38 is fixedly mounted to the rail mount portion.

As another option, not shown in detail, the at least one mounting pin is movably mounted to the rail mount portion in a pin axis direction such that the at least one mounting pin can be moved between an engaged and a disengaged position when the seat fitting is sitting on the seat rail 10.

The term "movably mounted" refers to a pin that is hold by the rail mount portion but that can still be moved in relation to the rail mount portion, e.g. back and forth in the pin direction.

As another option, not further shown in detail, the locking member comprises a base structure from which at least two locking pins extend to each interact with a mounting pin such that the locking pins for one seat fitting are commonly operated, i.e. inserted and released.

The term "base structure" refers to a portion holding the at least two locking pins.

In an example, the seat fitting is an aft seat fitting, i.e. for a rear (or aft) seat leg, where two or more, i.e. several bolts or pins are used for fixation of the seat leg to the rail.

In an example, the seat fitting is a forward (fwd) seat fitting, i.e. for a front seat leg, where two or more, i.e. several bolts or pins are used for fixation of the seat leg to the rail, such as for situations with increased load transfer also via the front seat leg.

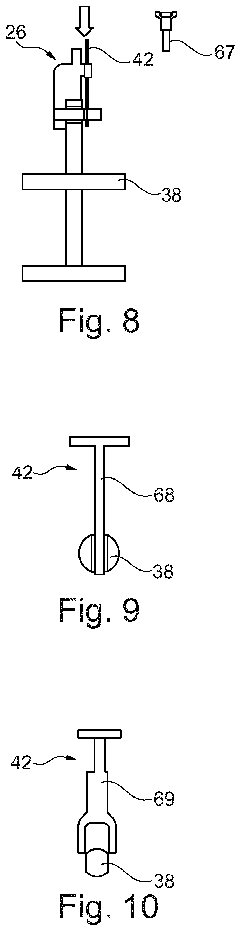

Fig. 8 shows another example of a locking member that comprises a quick release locking device 67.

Fig. 9 shows an example of a locking member that comprises a ball locking pin 68 as an example of a quick release device in which ball elements at an inserting portion are spring biased in a radially outward direction for engaging with recessions in a counterpart of the pin. A manually movable part can lock the ball elements in the extended position for securely resting of the locking member in the locking position.

Fig. 10 shows a further example of a locking member that is provided as a fork can be provided to lock the pin that reaches through the through hole. A smaller (security) pin can be inserted in a transverse hole within the (mounting) pin. The mounting pin can also be referred to as mounting bolt.

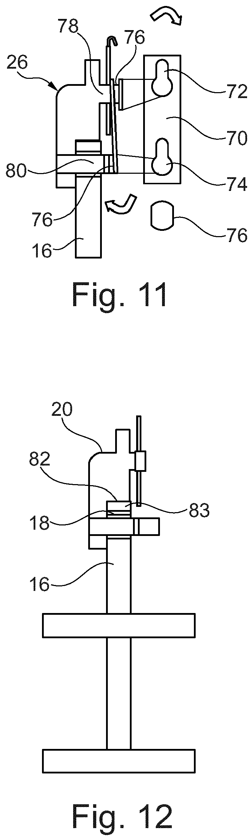

Fig. 11 shows a further example of a locking member. A locking plate 70 with upper 72 and lower 74 key-hole shape opening (normal keyhole oriented on the top) can be provided to be moved within grooves 76 within an upper pin 78 and a lower pin 80. The lower pin can be the bolt for engagement with the seat rail. The keyhole plate 70 can be assembled to the fitting on the top side over a "mushroom" head geometry which equals in size the larger diameter of the keyhole. The bottom part will be assembled over the pin where the pin comes with two grooves. The bolt has the equivalent diameter as the large keyhole and the grooves have the dimension of the smaller hole. The entire keyhole plate will be moved downwards after using the large holes for initial assembly.

Fig. 12 shows an example of a fitting with contacting portions. The fitting body comprises a lower resting surface 82 for abutting an upper edge of the vertical web member 16 of the rail when mounted to the rail. In an option, the lower resting surface 82 comprises two projections (not shown) acting as supports for contacting the upper edge of the rail. As an option, an inlay 83 made from hard plastic can be provided.

The term "lower resting surface" refers to a part of the fitting body that faces towards the upper rail edge when being mounted or about to be mounted.

In an example, the fitting body as the seat interface is provided with a non-metallic sliding pad for protecting the upper surface of the vertical web of the seat rail 10.

Fig. 13a shows another example of mounting a seat fitting 26 to a seat rail 10. As an example, the seat fitting 26 is provided with a guidance 85 in relation to the sat rail 10. The guidance 85 can be a cantilevering guidance pin. The seat fitting 26 comprises a fixed pin 38. The seat fitting can thus be moved along the seat rail in its length direction, also together with a mounted seat, when the seat fitting is moved in a lateral direction, i.e. transverse to the longitudinal rail, such that the pins are no longer engaging the holes in the rail. Fig. 13b shows the fitting mounted to the seat rail 10. In addition to the guidance pin, also an extending structural support section can be provided.

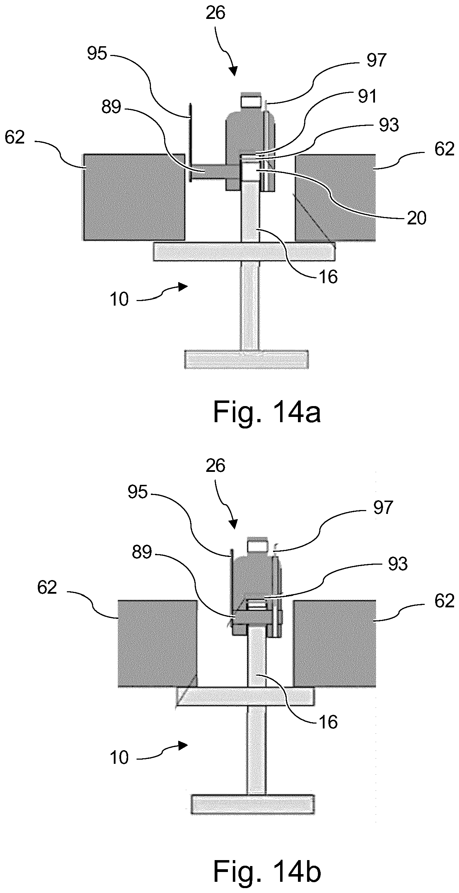

Fig. 14a shows a further example of mounting a seat fitting 26 to a seat rail 10. As an example, the seat fitting 26 is provided without guidance in a direction transverse to the sat rail 10. However, the seat fitting 26 comprises a loose or axially movable pin arrangement 89. The pin (or pins) can be moved axially to engage and de-engage with the holes 20 in the vertical web member 16 of the seat rail 10. A contact portion 91 of the seat fitting to contact the upper edge of the seat rail is provided. The seat fitting can thus be moved along the seat rail in its length direction, also together with a mounted seat. As an option, a protection component 93 or gliding support element like a Teflon strip can be provided. A vertically extending handle part 95 for operating, i.e. translating the pin (or pins), is provided. In an option, the handle part 95 is accessible from above floor level. In an example, one pin is provided. In another example, two or more pins are provided. As an option, the pins can be connected via the handle part or another structure to be able to operate the pins together. Fig. 14b shows the seat fitting 26 mounted to the seat rail 10 with pins properly inserted. Further, the pins can be locked via a locking member 97. As an option, also the handle part 95 can be configured to additionally engage with the seat fitting such that the pins are locked and cannot de-engage, also referred to as disengage.

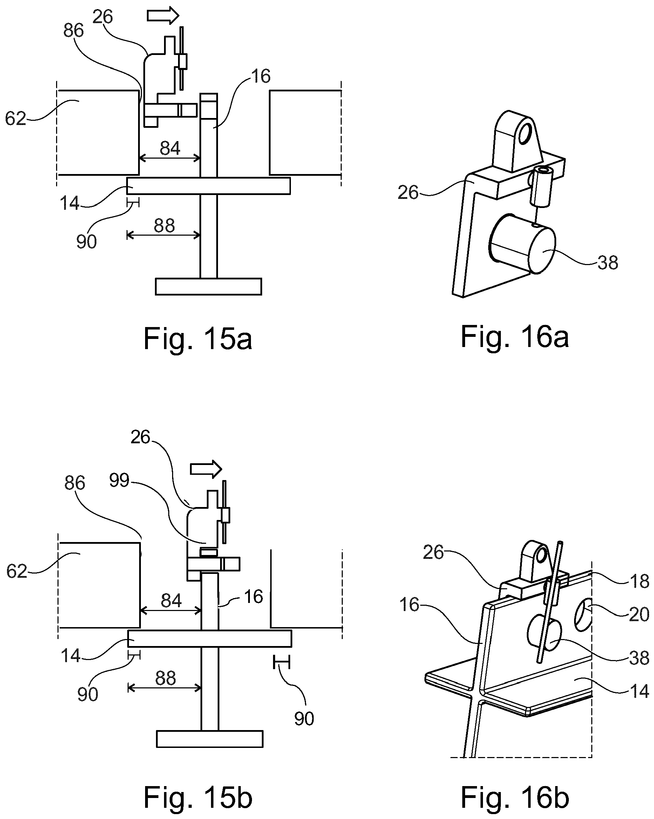

Fig. 15a shows an example of mounting a seat fitting 26 to a seat rail 10. As an example, the seat fitting 26 is provided without guidance in relation to the sat rail 10. The seat fitting 26 comprises a fixed pin 38. Fig. 15b shows the seat fitting 26 mounted to the seat rail 10. As an option, the seat fitting 26 is contacting the seat rail on the top of the web with a contacting portion 91 in the mounted state. In another option, load transfer is provided via the contacting portion 91 and the pins. In another option, load transfer is mainly or even exclusively provided via the pins.

In an example, a free space with a space width 84 is provided between the vertical web member 16 and the edges 86 of the adjacent floor panels 62. The mounting pin has a pin length that is maximum or less then the space width 84.

As an option, the first horizontal flange member 14 has a cantilevering length 88 in relation to the vertical web member 16 that is larger than the space width to provide a stripe 90 of support for the adjacent floor panels along the length of the flange.

In an option, (not shown) the stripe of support comprises a plurality of horizontally protruding support portions and recesses (providing less or even no support) between the protruding support portions.

Fig. 16a shows an example of the seat fitting 28, and Fig. 16b shows the seat fitting mounted to a seat rail 10 and locked with a locking pin 92.

In an option, not shown in detail, the seat fitting 26 is provided as a front fitting for a front seat leg. The engaging part of the front fitting comprises one of the mounting pins for engaging with one of the through holes 20.

In another option, not shown in detail, the seat fitting 26 is provided as a rear fitting for a rear seat leg. The engaging part of the rear fitting comprises at least two of the mounting pins for each engaging with one of the through holes 20.

The term "front fitting" refers to the bracket or clamp for mounting the front seat leg(s) to the seat rail 10.

The term "rear fitting" refers to the bracket or clamp for mounting the rear seat leg(s) to the seat rail 10.

The terms front and rear refer to the orientation of the seat when in use in an aircraft and the passenger sitting in the seat is locking in the direction of travel.

The front fitting mainly has to absorb forces acting with a vertically downward oriented vector, i.e. forces pushing downwards. The rear fitting mainly has to absorb forces acting with a vertically upward oriented vector, i.e. forces pulling upwards.

In an example, the rear fitting has three pins for engaging with three through holes.

In an option, several seat fittings are provided from which at least some are front fittings, and some are rear fittings.

To keep the same load distribution as today (back fitting transfers tension loads → more contact required; front fitting transfers compression loads → less contact required) it is foreseen to keep the aft fitting with e.g. 2-3 pins and the front fitting with a single pin.

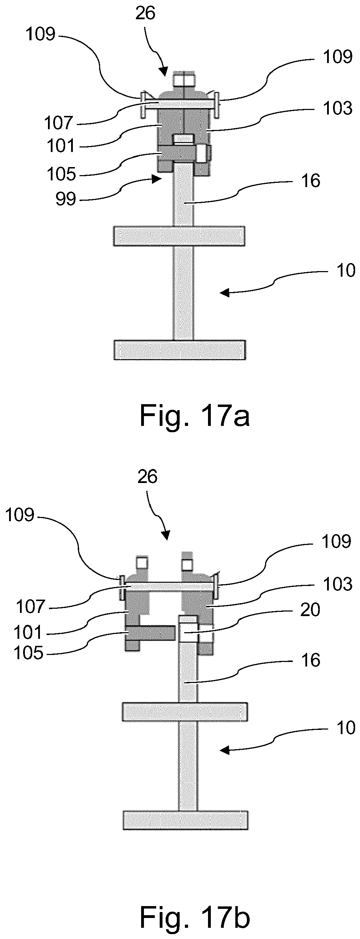

Fig. 17a shows a fitting with a fork-like structure for engaging the vertical web member in a mounted state, and Fig. 17b shows the fork-like structure in an opened stated for repositioning the fitting on the rail. Fig. 17a shows an example of the fitting, where the fitting body comprises a fork-like structure 99 for engaging the vertical web member 16. A first body part 101 and a second body part 103 are provided. At least one of the first body part and the second body part are having a locking member 105 for engaging with one of the through holes 20 in the seat rail 10. The first body part 101 and the second body part 103 are configured as temporarily releasable from each other to disengage the locking member 105 like the mounting pin from the seat rail. When the locking member 105 is disengaged, the fork-like structure 99 can be moved among the rail or even removed completely, for example for repositioning or reconfiguring a passenger seating arrangement.

Fig. 17a and Fig. 17b show an option, where a guiding structure 107 is provided that provides a lateral guided translation of at least one of the first body part and the second body part along the guiding structure. In an example, the guiding structure 107 is provided as a guiding bolt reaching through holes in the first body part and the second body part. One or two wider end part 109 can be provided as abutment part to limit the way of movement and to ensure that the parts remain connected.

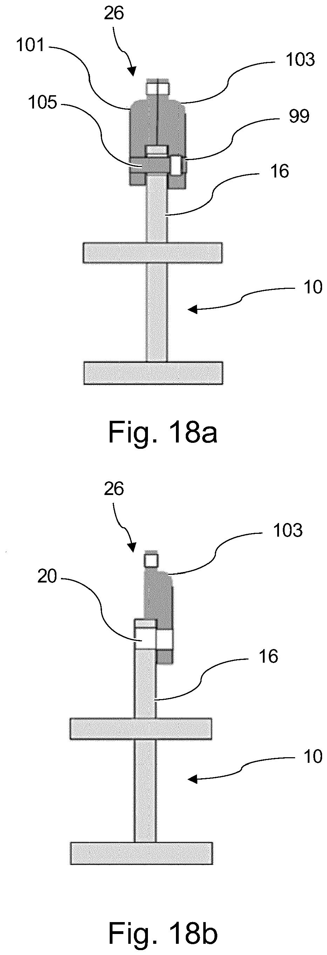

Fig. 18a shows a variation of a fitting with a fork-like structure in a mounted state, and Fig. 18b shows the fork-like structure in a state for repositioning the fitting on the rail. The first body part 101 and the second body part 103 can be detached from each other. For example, one of the first body part 101 and the second body part 103 comprises a fixed bolt as the locking member for engaging the holes 20 in the seat rail. The body part can be detached such that the seat fitting can be repositioned. For this purpose, the other one of the first body part 101 and the second body part 103 comprises a resting portion that provides a secure resting on the upper edge of the rail while the seat fitting can be moved along the rail. In the position of Fig. 18b, the seat fitting 26 can also be removed from the seat rail 10.

For example, the fork-like structure is provided for the aft seat leg, i.e. the rear seat leg. In another example, the fork-like structure is provided for the front seat leg.

In an option, the guiding bolt also comprises a locking element to lock the seat fitting 26 upon the mounting bolt or pin is inserted through one the holes in the seat rail 10. In an option, the solution of Fig. 17a and Fig. 17b is provided for both rear seat legs. In another option, the solution of Fig. 17a and Fig. 17b is provided for both front seat legs. In a further option, the solution of Fig. 17a and Fig. 17b is provided for both rear and both front seat legs.

In an option, the solution of Fig. 18a and Fig. 18b is provided for both rear seat legs. In another option, the solution of Fig. 18a and Fig. 18b is provided for both front seat legs. In a further option, the solution of Fig. 18a and Fig. 18b is provided for both rear and both front seat legs.

In a still further option, the different solutions of Fig. 17a and Fig. 17b and Fig. 18a and Fig. 18b are combined for a seat arrangement.

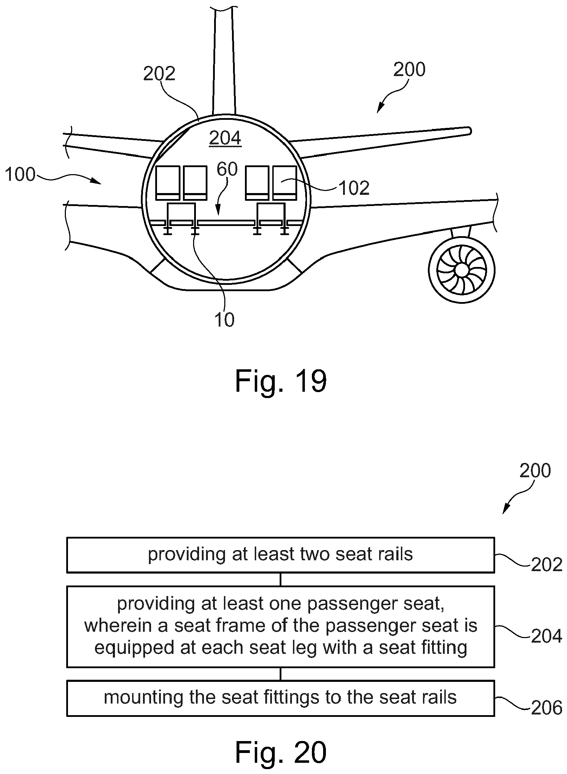

Fig. 19 shows an example of a passenger seating arrangement 100 for an aircraft in the context of a cross-section of an aircraft 200. The passenger seating arrangement 100 for an aircraft comprises an example of the floor assembly 60 according to one of the examples above. Further, the passenger seating arrangement 100 for an aircraft comprises a plurality of passenger seats 102. The passenger seats 102 are mounted to the vertical web members of the seat rails 10.

The term "passenger seats" refers to individual seats with individual seat frames as well as to seat arrangements with two or more seats arranged on a common seat frame.

In a further option, the aircraft 200 is provided that comprises a fuselage 202 and a cabin 204 arranged within the fuselage. At least a part of the cabin 204 is equipped with an example of the passenger seating arrangement 100 according to the previous example.

In a still further option, also a use of a seat rail according to one of the examples above in an aircraft is provided. In another option, also a use of a seat fitting to one of the examples above in an aircraft is provided. In a further option, also a use of a seat fixation system to one of the examples above in an aircraft is provided.

Fig. 20 shows basic steps of an example of a method 300 for mounting seats in an aircraft cabin. The method 300 comprises the following steps: In a first step 302, at least two seat rails according to the examples above are provided. In a second step 304, at least one passenger seat is provided. A seat frame of the passenger seat is equipped at each seat leg with a seat fitting according to one of the examples above. In a third step 306, the seat fittings are mounted to the seat rails.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A seat rail (10) for mounting passenger seats in an aircraft, the seat rail comprising a longitudinal rail body (12) with:
- a first horizontal flange member (14); and
- a vertical web member (16) protruding perpendicular from the first horizontal flange member;
wherein the first horizontal flange member is configured for attaching floor panels to the first horizontal flange member at least on one side of the vertical web member;
wherein the vertical web member is configured for mounting aircraft passenger seats; wherein the vertical web member comprises an upper edge (18) and a plurality of horizontal through holes (20) in the vertical web member arranged in a regular pattern; and
wherein the plurality of through holes is configured to receive locking members for releasably mounting seat fittings to the upper edge of the vertical web member.

2. Seat rail according to claim 1, further comprising a second horizontal flange member (22) and a vertical web segment (24) between the second horizontal flange member and the first horizontal flange member such that the seat rail is also provided as structural crossbeam member of the cabin floor construction.

3. A seat fitting (26) for mounting passenger seats in an aircraft, the seat fitting comprising a fitting body (28) with:
- a connection portion (30) for connection to a seat leg of a passenger seat; and
- a rail mount portion (32) for mounting the seat fitting to a vertical web member of a seat rail;
wherein the connection portion comprises a connecting part (34) configured for a connection with a lower end of a seat leg;
wherein the rail mount portion comprises an engaging part (36) with at least one mounting pin (38) for releasably engaging with a horizontal through hole in the vertical web member.

4. Seat fitting according to claim 3, wherein the connection portion comprises a bolt receiving part (40) as the connecting part; wherein the bolt receiving part is configured for a bolt connection with a lower end of a seat leg; and
wherein an axis of the bolt receiving part is aligned parallel to an axis of the at least one mounting pin.

5. Seat fitting according to claim 3 or 4, wherein the seat fitting also comprises a locking member (42), configured to interact with the at least one of the at least one mounting pin once the mounting pin engages the through hole such that the mounting pin cannot de-engage with the through hole.

6. Seat fitting according to claim 5, wherein the locking member comprises a base structure from which at least two locking pins extend to each interact with a mounting pin such that the locking pins for one seat fitting are commonly operated, i.e. inserted and released.

7. Seat fitting according to one of claims 3 to 6, wherein the seat fitting is provided as:
i) a front fitting for a front seat leg; wherein the engaging part of the front fitting comprises one mounting pin for engaging with one through hole; or
ii) a rear fitting for a rear seat leg; wherein the engaging part of the rear fitting comprises at least two pins for each engaging with one of the through holes.

8. Seat fitting according to one of claims 3 to 7, wherein the at least one mounting pin is movably mounted to the rail mount portion in a pin axis direction such that the at least one mounting pin can be moved between an engaged and a disengaged position when the seat fitting is sitting on the seat rail.

9. Seat fitting according to one of claims 3 to 7, wherein the at least one mounting pin is fixedly mounted to the rail mount portion; and
wherein the fitting body comprises a resting portion to provide a resting position of the seat fitting on the seat rail while the seat fitting is moved laterally to the seat rail such that the at least one mounting pin can disengage from the vertical web member of the seat rail.

10. Seat fitting according to one of claims 3 to 9, wherein the fitting body comprises a lower resting surface (82) for abutting an upper edge of the vertical web member of the rail when mounted to the rail; and
wherein the lower resting surface comprises two projections acting as supports for contacting the upper edge of the rail.

11. A seat fixation system (50) for passenger seats in an aircraft, the system comprising:
- at least one rail (10) according to claim 1 or 2; and
- at least one seat fitting (26) according to one of the claims 3 to 10;
wherein the at last one seat fitting is releasably mountable to the upper edge of the vertical web member by inserting the at least one mounting pin in one of the through holes of the vertical web member.

12. A floor assembly (60) for an aircraft cabin, the floor assembly comprising:
- a plurality of cabin floor panels (62); and
- at least:
i) two seat rails (10) according to claim 1 or 2; or
ii) one seat fixation system (50) according to claim 11;
wherein at least a part of the floor panels is arranged adjacent to the seat rails with their panel edges attached to a horizontal web member of the respective adjacent seat rail.

13. Floor assembly according to claim 12, wherein the upper edge of the vertical web member of the seat rail is aligned with an upper surface of the cabin floor panels.

14. A passenger seating arrangement (100) for an aircraft, the arrangement comprising:
- a floor assembly (60) according to claim 12 or 13; and
- a plurality of passenger seats (102);
wherein the passenger seats are mounted to the vertical web members of the seat rails.

15. A method (300) for mounting seats in an aircraft cabin, comprising the following steps:
- providing (302) at least two seat rails according to claim 1 or 2;
- providing (304) at least one passenger seat, wherein a seat frame of the passenger seat is equipped at each seat leg with a seat fitting according to one of the claims 3 to 10; and
- mounting (306) the seat fittings to the seat rails.
